# EUROPÄISCHE PATENTANMELDUNG

(11) **EP 1 403 799 A1**
(43) Veröffentlichungstag der Anmeldung: **31.03.2004**
(21) Anmeldenummer: 03020645.2
(22) Anmeldetag: 11.09.2003
(51) Int. Cl.: G06F 17/60

(54) **Elektronisches Datenaustauschsystem**

(30) Priorität: 26.09.2002 DE 10245169
(71) Anmelder: CLAAS Selbstfahrende Erntemaschinen GmbH, 33428 Harsewinkel (DE)
(72) Erfinder: Wippersteg, Heinz, Hermann, 32257 Bünde (DE)

(57) **Zusammenfassung**

Die Erfindung betrifft ein auf elektronischem Datenaustausch basierendes System 1 zur Kommunikation zwischen Nutzern (6), wobei die Nutzer (6) sowohl Anbieter (5) als auch Empfänger (4) von Informationen (9-11) sein können und wenigstens ein Nutzer (6) eines Datenübertragungsnetzes (2) bedarfsgerechte Informationen (9) als Anbieter (5) generiert, wobei die bedarfsgerechten Informationen (9) in spezifischen Standards gespeichert werden und diese in spezifischen Standards hinterlegten bedarfsgerechten Informationen (9) von den jeweiligen Empfängern (4) abgerufen und/oder editiert werden können. Damit wird ein Datenaustauschsystem 1 geschaffen, welches geeignet ist, brachenübergreifend Prozess- und Managementketten zu optimieren.

## Beschreibung

Die Erfindung betrifft ein auf elektronischem Datenaustausch basierendes System zur Kommunikation zwischen Nutzern eines Datenaustauschsystems gemäß dem Oberbegriff des Anspruchs 1.

Die Effizienz von Produktionsprozessen und der Markterfolg von Produkten werden zunehmend davon bestimmt, wie schnell neueste wissenschaftliche Erkenntnisse angewandt, neue Technologien umgesetzt und branchenübergreifende Informationen zu Verfügung gestellt werden. In diesem Zusammenhang gewinnen globale Datenaustausch- und Informationssysteme zunehmend an Bedeutung. Neben Gesichtspunkten der Kostensenkung im Produktionsprozess betrifft dies vor allem Kundeninformationssysteme, die beispielsweise Betreiber von Maschinen oder Maschinensystemen in die Lage versetzen, unter anderem durch effizientere Methoden der Maschinenbedienung deren Produktivität zu erhöhen. Zudem liegt es im Interesse der Betreiber von Maschinen reparaturbedingte Stillstandszeiten gering zu halten. Besondere Bedeutung kommt in diesem Zusammenhang dem frühzeitigen Erkennen von verschlissenen Bauteilen, der schnellen und kostengünstigen Beschaffung von Austauschteilen und dem Wechsel defekter Baugruppen in Zeiträumen, in denen die Maschine ohnehin stillsteht zu. Sind Maschinen in komplexe Prozessketten eingebunden hängt ihr effizienter Einsatz maßgeblich von dem Optimierungsgrad der gesamten Prozesskette ab. Aufgrund der Komplexität solcher Prozessketten ist eine effiziente Optimierung derartiger Prozessketten nur unter Zuhilfenahme elektronischer Datenaustausch- und Informationssysteme sinnvoll möglich.

Im Bereich der Produktion, Weiterverarbeitung und Vermarktung landwirtschaftlicher Produkte tritt zudem noch das Problem auf, dass die Produkte selbst und die von den Produkten bestimmten Prozess- und Managementketten maßgeblich von komplexen natürlichen Einflüssen sowohl in der so genannten Primärproduktion als auch in Weiterverarbeitungsprozessen bestimmt werden. Aus diesem Grund beschränken sich Optimierungsprozesse in derartigen Prozessketten im Wesentlichen unmittelbar auf mobile oder stationäre Maschinensysteme, sodass hier nur eine Optimierung des kleinen Bereichs der Maschinensysteme innerhalb einer komplexen Prozesskette möglich ist. Zudem existieren umfangreiche geographische Informationssysteme, die den Betreibern der Maschinensysteme auf die Bedürfnisse der Betreiber zugeschnittene Informationen beispielsweise über die geographische Beschaffenheit und Witterungsverhältnisse im jeweiligen Einsatzgebiet der mobilen Maschinen zu Verfügung stellen. Auch diese geographischen Informationssysteme beschränken sich auf die Optimierung eines kleinen Ausschnitts der komplexen Prozesskette Produktion, Weiterverarbeitung und Vermarktung landwirtschaftlicher Produkte. Der wesentliche Nachteil dieser bekannten Optimierungssysteme liegt vor allem darin, dass mit diesen Systemen eine durchgängige Kommunikation nicht möglich ist. Die in zum Teil sehr unterschiedlichen Datenaustausch- und Informationssystemen generierten Informationen sind untereinander nicht austauschbar und können bisher nicht zu gemeinsamen Datenpaketen mit auf den Informationsbedarf bestimmter Nutzer abgestimmten Inhalt zusammengestellt werden.

Aus dem Stand der Technik sind verschiedenste Datenaustausch- und Informationssysteme bekannt, deren Ziel es ist, Prozessketten zu optimieren. Beispielhaft sei hier auf die WO 01/75657 verwiesen, die ein auf elektronischem Handel basierendes Verfahren für Hersteller von Produkten offenbart, welches den Zukauf von Teilen für die Produktion des Herstellers optimiert. In Analogie zu anderen bekannten System dieser Art, findet hier der Austausch von Daten nur zwischen einem konkreten Hersteller, hier dem Klienten, und dem Lieferanten statt. Derartige Systeme sind allein auf die Generierung von Lieferaufträgen und die Optimierung der Lieferungsabwicklung bezüglich ganz bestimmter Produkte für die Produktion eines ganz bestimmten Herstellers gerichtet. Eine branchenübergreifende Regelung und Optimierung von Managementprozessen, die in der Regel aus einer Vielzahl von Prozessketten bestehen, lassen diese Systeme nicht zu. Zudem sind derartige System nicht in der Lage, aus Drittinformationen für einen bestimmten Klienten auf dessen Informationsbedarf abgestimmte Informationen zu generieren, die dann zugleich weiteren Nutzern mit ähnlichem oder gleichem Informationsbedarf zur Verfügung stehen, wobei die Nutzer dieser Informationen zugleich auf den Informationsgehalt dieser Informationen einwirken und diese beispielsweise ändern oder ergänzen können.

Der Erfindung liegt deshalb die Aufgabe zugrunde, ein auf elektronischem Datenaustausch basierendes System zu entwickeln, welches von Nutzern generierte bedarfsgerechte Informationen umfasst, die'von den Nutzern des Datenaustauschsystems übergreifend genutzt und editiert werden können.

Erfindungsgemäß wird die Aufgabe durch ein auf elektronischem Datenaustausch basierenden System mit den kennzeichnenden Merkmalen des Anspruchs 1 gelöst.

Indem ein oder mehrere Nutzer wenigstens eines Datenaustauschsystems bedarfsgerechte Informationen in spezifischen Standards als Anbieter generieren, die von als Empfänger dieser Informationen fungierenden Nutzern des Datenaustauschsystems auf den Bedarf des jeweiligen Empfängers abgestimmt abgerufen beziehungsweise editiert werden können, wird ein Datenaustauschsystem geschaffen, welches geeignet ist, brachenübergreifend Prozess- und Managementketten zu optimieren.

Eine besonders effiziente Struktur des Datenaustauschsystems wird dann erreicht, wenn die Anbieter der bedarfsgerechten Informationen diese in Form von Diensten den Empfängern zur Verfügung stellen. Dies hat insbesondere den Vorteil, das auf diese Weise eine offene branchenübergreifende Kommunikation geschaffen wird, die unabhängig von verschiedenen Datenformaten ist, da die Generierung der Informationen innerhalb eines Dienstes unabhängig von dem erfindungsgemäßen Datenaustauschsystem der Nutzer ist.

In einer weiteren vorteilhaften Ausgestaltung der Erfindung könnte es von Vorteil sein, wenn auf der Ebene der Kommunikation zwischen Anbieter und Empfänger Standardisierungen des Datenaustauschs vorgenommen werden, sodass erforderliche Kompilierungsvorgange entbehrlich werden.

Indem die Anbieter der Dienste dem Empfänger die Informationen bedarfs- und zeitgerecht zur Verfügung stellen, wird gewährleistet, dass für den Empfänger einerseits eine zeitaufwendige Sichtung der ihm zur Verfügung gestellten Informationen entfällt und andererseits die für die Optimierung bestimmter Prozesse erforderlichen Informationen vor Beginn des jeweiligen Prozesses vorliegen, sodass zeit- und damit kostenaufwendige Verzögerungen des Prozessbeginns aufgrund langwieriger Informationsbeschaffung entfallen.

Eine besonders effiziente Informationsbeschäffung wird dann erreicht, wenn der Nutzer in dem Datenaustauschsystem Fragestellungen generieren kann, die dann von einem oder mehreren Anbietern von Diensten beantwortet werden ohne dass der Nutzer den Anbieter des Dienstes unmittelbar kontaktieren muss. Dies hat insbesondere den Vorteil, dass der Nutzer von zeitaufwendigen Suchprozessen zur Auswahl des für den jeweiligen Informationsbedarf geeigneten Diensteanbieters entlastet wird. Zudem spielt diese Art des Datenaustauschs dann eine wesentliche Rolle, wenn Maschinen untereinander Daten austauschen wollen.

Eine vorteilhafte Weiterbildung des erfindungsgemäßen Datenaustauschsystems wird dann erreicht, wenn der vom Nutzer beauftragte Diensteanbieter weitere Anbieter von Diensten zur Generierung der bedarfsgerechten Information für den als Empfänger fungierenden Nutzer hinzuzieht. Dies hat für den Empfänger der bedarfsgerechten Information den Vorteil, dass sich die Qualität der bedarfsgerechten Information erheblich verbessert, da Prozess- oder Managementkettenoptimierung in der Regel branchenübergreifende Spezialkenntnisse erfordert, die in der Regel nicht von speziellen Diensteanbietern erbracht werden können.

Je nach dem Charakter der beim Empfänger zu optimierenden Prozess- oder Managementkette können der oder die Diensteanbieter dem Empfänger permanent oder bedarfsgerecht zur Verfügung stehen. Insbesondere bei der Optimierung von Prozessen die sich aufgrund äußerer Einflüsse häufig ändern, wie etwa im Prozess des Erntens von Feldfrüchten, kann die permanente Verfügbarkeit eines Diensteanbieters sinnvoll sein. Hingegen unterliegen beispielsweise innerbetriebliche Produktionsprozesse weniger starken Schwankungen in Bezug auf die Funktionssicherheit von Maschinen, sodass hier eine permanente Verfügbarkeit eines Anbieters von Diensten eher nicht erforderlich ist.

Eine weitere Verbesserung der Qualität der bedarfsgerecht zur Verfügung gestellten Informationen wird dann erreicht, wenn die von dem Diensteanbieter bereitgestellten Informationen über die eigentliche Fragestellung des Nutzers in der Weise hinausgehen, dass der Empfänger Hintergrundinformationen zu der jeweils zu optimierenden Prozess- oder Managementkette erhält, wobei auch hier die Einbeziehung weiterer Diensteanbieter in die Informationsbeschaffung sinnvoll sein kann.

Um die für den Empfänger bestimmten bedarfsgerechten Informationen in einer für den Empfänger einfach zu sichtenden und zu nutzenden Weise verfügbar zu machen, kann es in vorteilhafter Weiterbildung der Erfindung sinnvoll sein in Abhängigkeit von der Art der Informationen diese dem Empfänger über einen einzigen oder mehrere Anbieter zur Verfügung zu stellen. Dabei wird es zweckmäßig sein, mit Zunahme der Komplexität der Informationen die Zahl der die Informationen dem Empfänger übermittelnden Dienstanbieter zu reduzieren und möglichst auf einen einzigen Diensteanbieter zu beschränken.

Eine große Flexibilität und universelle Anwendbarkeit des erfindungsgemäßen Datenaustauschsystems wird dann erreicht, wenn sowohl die Anbieter als auch die Empfänger der bedarfsgerechten Informationen stationäre oder mobile Einheiten sein können. Dies ist insbesondere deshalb wichtig, da Prozess- oder Managementketten in der Regel auch Fahrzeuge oder mobile Arbeitseinheiten umfassen.

Eine vorteilhafte Weiterbildung des auf elektronischem Datenaustausch basierenden erfindungsgemäßen Systems wird dann erreicht, wenn sowohl die Anbieter der Dienste als auch die Empfänger der bedarfsgerechten Informationen wechselseitig Informationen austauschen können. Damit wird die Möglichkeit geschaffen, dass optimierte Parameter von Prozess- oder Managementketten unmittelbar weitern unter ähnlichen Voraussetzungen tätigen Nutzern schnell zur Verfügung gestellt werden könne, ohne das die weiteren Nutzer sich zunächst von Diensteanbietern die letztlich gleichen Optimierungsparameter ermitteln lassen müssen.

Um die Kosten zum Betreiben des erfindungsgemäßen Datenaustauschsystems gering zu halten wird in einer vorteilhaften Weiterbildung der Erfindung vorgeschlagen an sich bekannte globale und örtlich begrenzte Datenaustauschsysteme wie etwa das Internet oder Funknetze zu nutzen.

Insbesondere bei mobilen oder stationären Einheiten, die im Betrieb nur schwer von dem Betreiber überwacht werden können ist es sinnvoll, wenn diesen Einheiten Sensoren zugeordnet sind, die ihrerseits auf die jeweilige Einheit bezogene spezifische Informationen generieren, die dann über das erfindungsgemäße Datenaustauschsystem weiteren Nutzern zur Verfügung gestellt werden.

Vorteilhafte Ausgestaltungen sind Gegenstand weiterer Unteransprüche und werden nachfolgend anhand von in Zeichnungen dargestellten Ausführungsbeispielen näher erläutert.

Es zeigen:
- Figur 1: eine schematische Blockbilddarstellung des erfindungsgemäßen auf elektronischem Datenaustausch basierenden Systems
- Figur 2: eine weitere schematische Blockbilddarstellung des erfindungsgemäßen auf elektronischem Datenaustausch basierenden Systems
- Figur 3: eine schematische Blockbilddarstellung eines konkreten Ausführungsbeispiels, welches nach dem erfindungsgemäßen auf elektronischem Datenaustausch basierenden Systems arbeitet.

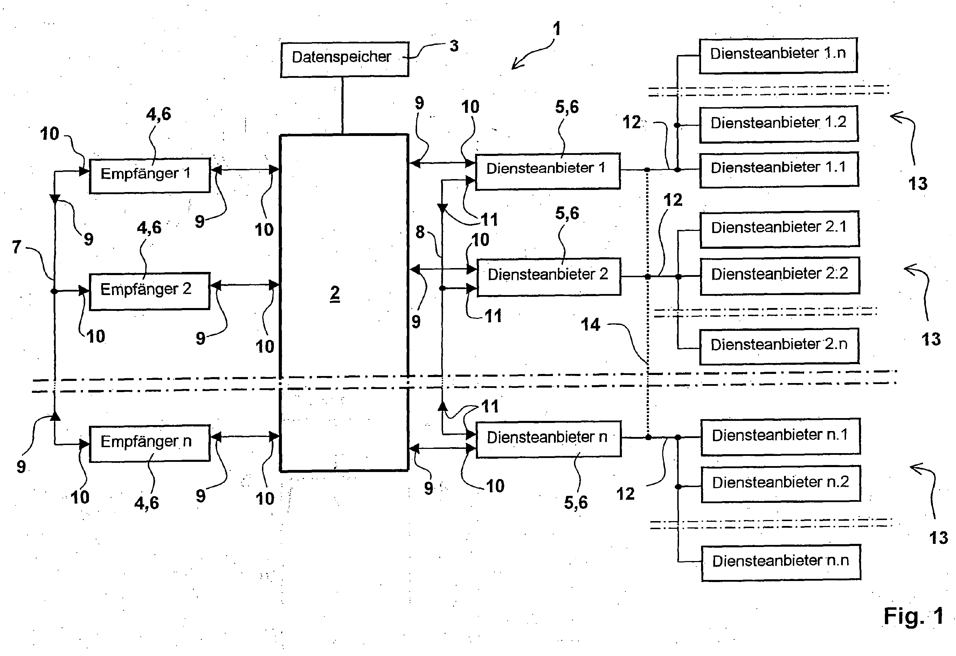

Figur 1 zeigt eine schematische Blockbilddarstellung des erfindungsgemäßen Datenaustauschsystems 1. Basis des erfindungsgemäßen Datenaustauschsystems 1 bildet ein Datenübertragungsnetz 2 dem zumindest eine zentrale Datenspeichereinheit 3 zugeordnet ist, wobei die Datenübertragung in dem Datenübertragungsnetz 2 sowohl drahtlos als auch über an sich bekannte elektrische Leitungssysteme erfolgen kann. An das Datenübertragungsnetz 2 sind weiter ein oder mehrere Empfänger 4 und ein oder mehrere erfindungsgemäße Diensteanbieter 5 angeschlossen, wobei deren Kommunikation mit dem Datenübertragungsnetz 2 ebenfalls drahtlos oder über elektrische Leitungssysteme erfolgen kann. Damit bilden die Empfänger 4 und die Diensteanbieter 5 die Nutzer 6 des erfindungsgemäßen Datenaustauschsystems 1. Zudem können sowohl die Empfänger 4 als auch die Diensteanbieter 5 über an sich bekannte drahtlose oder leitungsgebundene Datenübertragungsnetze 7, 8 jeweils untereinander zwecks Datenaustausch verbunden sein. Die als Empfänger 4 fungierenden Nutzer 6 des Datenaustauschsystems 1 beziehen einerseits die noch näher zu beschreibenden bedarfsgerechten Informationen 9 der Diensteanbieter 5. Zudem können die Empfänger 4 selbst bedarfsgerechte Informationen 10 generieren, die sowohl von den weiteren Empfängern 4 als auch von den Diensteanbietern 5 über die jeweiligen Datenübertragungsnetze 2, 7 abrufbar sind. Zudem können auch die als Diensteanbieter 5 fungierenden Nutzer 6 des erfindungsgemäßen Datenaustauschsystems 1 über das sie miteinander verbindende Datenübertragungsnetz 8 bedarfsgerechte Informationen 11 austauschen. Zur Generierung der bedarfsgerechten Informationen 9 können die Diensteanbieter 5 neben dem Austausch von Informationen 11 untereinander über Datenübertragungsnetze 12 mit Sub-Diensteanbietern 13 verbunden sein, wobei diese Sub-Diensteanbieter 13 nicht unmittelbar mit den Empfängern 4 der zu generierenden bedarfsgerechten Informationen 9 in Kommunikation treten können. Dies hat den Vorteil, dass die Diensteanbieter 5 zur Verbesserung der Qualität ihrer bedarfsgerecht generierten Informationen 9 nach eigenem Ermessen eine Vielzahl von Informationsquellen 13 hinzuziehen können, ohne das der Empfänger 4 der bedarfsgerechten Informationen 9 selbst durch Hinzuziehung weitere Diensteanbieter 5 eine Optimierung der ihm zugegangenen bedarfsgerechten Informationen 9 vornehmen muss. Hingegen ist es möglich, dass verschiedene Diensteanbieter 5 auf die Sub-Diensteanbieter 13 anderer Dienstanbieter 5 zur Informationsbeschaffung 14 zugreifen können. Es liegt im Rahmen der Erfindung, dass die mit verschiedenen Bezugszeichen versehenen Datenübertragungsnetze 2, 7, 8, 12, 14 von einem einzigen Datenübertragungsnetz 2 gebildet werden können. Damit die in den Datenübertragungsnetzen 2, 7, 8, 12, 14 zwischen den Empfängern 4 und den Diensteanbietern 5, 13 auszutauschenden Informationen 9-11 auf einfache Weise von dem jeweiligen Nutzer 6 abgerufen werden können, sind diese Informationen 9-11 und die diesen zugrunde liegenden Generierungsprogramme vorzugsweise in XML-Standards geschrieben. Ein besonders effizienter Datenaustausch wird dann erreicht, wenn das erfindungsgemäße Datenaustauschsystem 1 in so genannten Internet-Standards umgesetzt wird, da das Internet als globales Datenaustauschsystem weit verbreitet und dessen Strukturen wie etwa die Verwendung von IP-Adressen und UDDI-Standards branchenübergreifend geläufig sind.

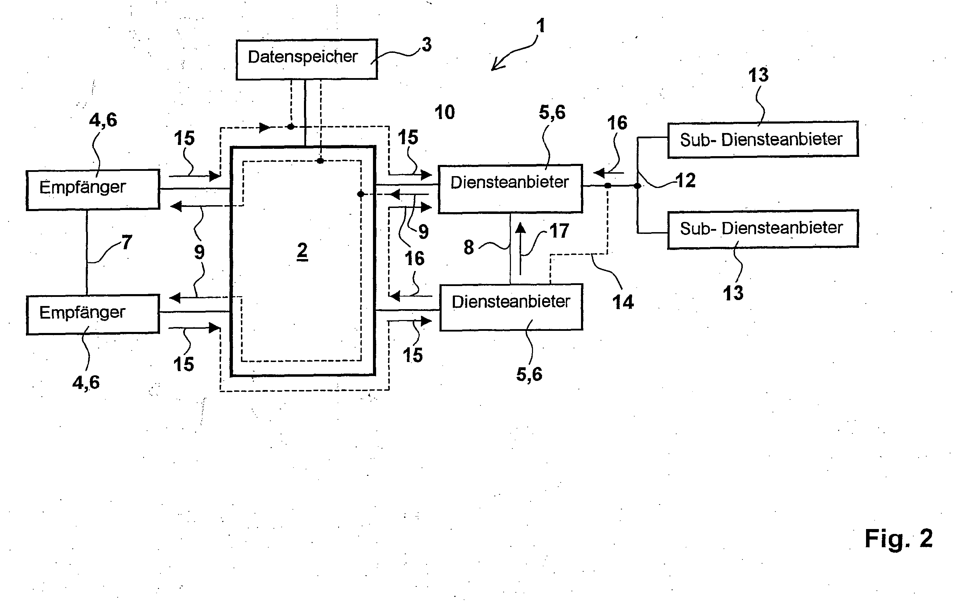

Das Prinzip des Datenaustauschs in dem erfindungsgemäßen Datenaustauschsystem 1 ist in Figur 2 dargestellt und wird nachfolgend näher erläutert. Aus Übersichtlichkeitsgründen wird das Datenaustauschprinzip nur anhand von jeweils zwei Empfängern 4, zwei Diensteanbietern 5 und ebenfalls zwei Sub-Diensteanbietern 13 erläutert. Es liegt im Rahmen der Erfindung, dass das erfindungsgemäße Datenaustauschsystem 1 von einer beliebigen Anzahl von Empfängern 4, Diensteanbietern 5 und Sub-Diensteanbietern 13 gebildet werden kann. Wenigstens ein als Empfänger 4 fungierender Nutzer 6 generiert in dem Datenübertragungsnetz 2 eine nutzerspezifische Fragestellung 15 die von zumindest einem Diensteanbieter 5 empfangen und bearbeitet wird. Dabei umfasst die Bearbeitung der nutzerspezifischen Fragestellung 15 zunächst die Beschaffung von Informationen 16, 17. In einer ersten Ausführungsform kann die Beschaffung der Informationen 16, 17 so angelegt sein, dass der Diensteanbieter 5 unmittelbar von weiteren Diensteanbietern 5 oder Sub-Diensteanbietern 13 Informationen 16, 17 zur Beantwortung der nutzerspezifischen Fragestellung 15 abruft, diese analysiert und strukturiert und dem Empfänger 4 unmittelbar die bedarfsgerechte Information 9 übermittelt. In einer weiteren Ausführungsform kann die bedarfsgerechte Information 9 auch in der Weise generiert werden, dass zunächst ein erster Diensteanbieter 5 und gegebenenfalls ihm zugeordnete Sub-Diensteanbieter 13 empfängerspezifische bedarfsgerechte Informationen 16 generiert, die dann von einem oder mehreren weiteren Diensteanbietern 5 und gegebenenfalls diesen zugeordneten Sub-Diensteanbietern 13 komplettiert werden und erst dann dem Empfänger 4 als bedarfsgerechte Informationen 9 zur Verfügung gestellt werden. Da sowohl Prozess- als auch Managementketten mitunter von sich kurzfristig ändernden Parametern erheblich beeinflusst werden, muss zudem die Möglichkeit gegeben sein, dass die von den Diensteanbietern 5 generierten bedarfsgerechten Informationen 9 und die von den Empfängern generierten Informationen 10 editierbar sind. Hierfür ist die dem erfindungsgemäßen Datenaustauschsystem 1 zugeordnete Datenspeichereinheit 3 so adressiert, dass sowohl die Empfänger 4 ihre Fragestellungen 15 und Informationen 10 als auch die Diensteanbieter 5 die generierten bedarfsgerechten Informationen 9 in der Datenspeichereinheit 3 ablegen können und von beliebigen Nutzern 6 des Datenaustauschsystems 1 abruf- und editierbar sind. In an sich bekannter Weise kann der Zugriff auf die in der Speichereinheit 3 hinterlegten Daten 9, 10, 15 hierarchisch aufgebaut sein, sodass einerseits nur bestimmte Nutzer 6 auf bestimmte Daten 9, 10, 15 zugreifen können und umgekehrt nur bestimmte Nutzer 6 zum Editieren der in der Speichereinheit 3 hinterlegten Daten 9, 10, 15 berechtigt sind. Diese so genannte Online-Aktualisierung der in der Datenspeichereinheit 3 hinterlegten Informationen 9, 10, 15 hat zudem den Vorteil, dass der Empfänger 4 auf eine einmal generierte Fragestellung 15 schnell aktualisierte bedarfsgerechte Informationen 9 abrufen kann, ohne das hierfür den Optimierungsprozess verzögernde Informationsbeschaffungszeiten verstreichen. Zudem kann je nach Art der zu optimierenden Prozess- oder Managementkette der Empfänger 4 der bedarfsgerechten Informationen 9 permanent oder zeitlich begrenzt mit dem erfindungsgemäßen Datenaustauschsystem 1 verbunden sein. Dies ist insbesondere unter Berücksichtigung von Nutzungsgebühren für die von den Diensteanbietem 5 zur Verfügung gestellten bedarfsgerechten Informationen 9 und von Nutzungsgebühren der Netzbetreiber von erheblicher Bedeutung. Damit die an den Empfänger 4 zu übermittelnden bedarfsgerechten Informationen 9 in nutzerfreundlichen Formaten generiert werden, die von dem Empfänger 4 ohne aufwendige Sichtungsprozesse nutzbar sind, kann in einer weiteren vorteilhaften Ausgestaltung vorgesehen sein, dass ein einziger Diensteanbieter 5 die bedarfsgerechten Informationen 9 generiert und in dem Datenspeicher 3 für den Empfänger 4 abruf- und editierbar hinterlegt, wobei, wie bereits beschrieben, die Informationsbeschaffung des einen Diensteanbieters 5 auch unter Einbeziehung weiterer Diensteanbieter 5 oder Sub-Diensteanbieter 13 erfolgen kann.

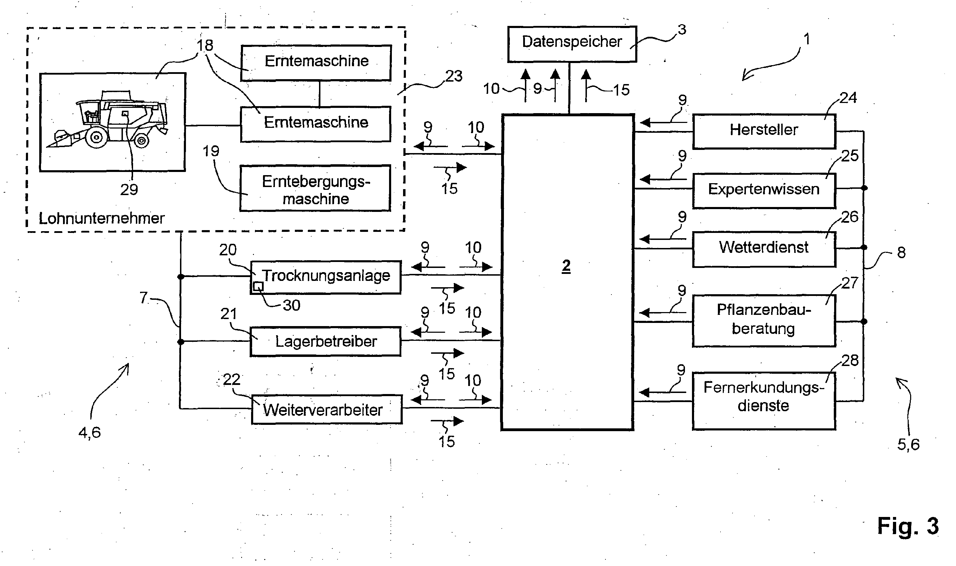

Ein konkretes Ausführungsbeispiel des auf elektronischem Datenaustausch basierenden Systems 1 ist in Figur 3 am Beispiel einer landwirtschaftlichen Prozess- und Managementkette dargestellt. Dabei umfasst das Datenaustauschsystem 1 zunächst wieder ein Datenübertragungsnetz 2 mit integrierter Datenspeichereinheit 3. Die als Empfänger 4 der bedarfsgerechten Informationen 9 fungierenden Nutzer 6 werden hier beispielhaft von einer oder mehreren beliebig ausgeführten Erntemaschinen 18, von Erntebergungsmaschinen 19, diesen nachgeordneten Trocknungsanlagen 20, Lagerbetrieben 21 und beliebigen nicht näher bezeichneten Weiterverarbeitern 22 landwirtschaftlicher Produkte gebildet. Gemäß der gestrichelten Darstellung können die Erntemaschinen 18 und die Emtebergungsmaschinen 19 auch gemeinschaftlich als Fuhrpark eines oder mehrer so genannter Lohnunternehmer 23 als Nutzer 6 des erfindungsgemäßen Datenaustauschsystems 1 auftreten. Aus Übersichtlichkeitsgründen wird im Folgenden davon ausgegangen, dass nur das Lohnunternehmen 23 mit dem Datenübertragungsnetz 2 des erfindungsgemäßen Datenaustauschsystems 1 verbunden ist. Es liegt jedoch im Rahmen der Erfindung, dass auch jede einzelne Erntemaschine 18 und jede einzelne Erntebergungsmaschine 19 mit dem Datenübertragungsnetz 2 verbunden sein kann. Analog hierzu sind mit dem Datenübertragungsnetz 2 eine Trocknungsanlage 20, ein Lagerbetreiber 21 und ein beliebiger Weiterverarbeiter 22 der landwirtschaftlichen Produkte mit dem Datenübertragungsnetz 2 verbunden. Zudem können die Nutzer 18-22 auch untereinander über ein Datenübertragungsnetz 7 drahtlos oder leitungsbasierend verbunden sein. Im dargestellten Ausführungsbeispiel werden die als Diensteanbieter 5 fungierenden Nutzer 6 von einem oder mehreren Herstellern 24 der am Prozess beteiligten Erntemaschinen 18 und/oder Erntebergungsmaschinen 19, von Diensteanbietern für Expertenwissen 25, für Wetterdiensinformationen 26, für Pflanzenbauberatung 27 sowie Anbietern von Fernerkundungsdiensten 28 gebildet. Die explizit angegebene Aufzählung ist nur beispielhaft und nicht auf diese beschränkt. Als Diensteanbieter 5 kommen verschiedenste Diensteanbieter 5 in Betracht, sofern deren angebotener Dienst nur geeignet ist, auf von Empfängern 4 generierte Fragestellungen 15 bedarfsgerechte Informationen 9 bereitzustellen. Die beispielhaft aufgezählten Diensteanbieter 24-28 sind ebenfalls mit dem oder den Datenübertragungsnetzen 2, 8 des erfindungsgemäßen Datenaustauschsystems 1 verbunden. Auf die Darstellung von Sub-Diensteanbietern 13 wird in Figur 3 ebenfalls aus Übersichtlichkeitsgründen verzichtet. Es liegt jedoch im Rahmen der Erfindung, dass sich die angeführten Diensteanbieter 24-28 in der bereits beschriebenen Weise so genannter Sub-Diensteanbieter 13 bedienen können. Jeder der als Empfänger 4 fungierenden Nutzer 6 kann nun Fragestellungen 15 in dem erfindungsgemäßen Datenaustauschsystem 1 generieren, die zunächst in der Datenspeichereinheit 3 hinterlegt werden und sodann von einem oder mehreren der als Diensteanbieter 5 fungierenden Nutzer 6 berarbeitete werden. Zudem können die Empfänger 4 selbst Informationen 10 generieren, die mittels des Datenübertragungsnetzes 2 in der Datenspeichereinheit 3 hinterlegbar sind. Die in der Datenspeichereinheit 3 hinterlegten Fragestellungen 15 und Informationen 10 können nun durch die Diensteanbieter 24-28 abgerufen werden, wobei die Diensteanbieter 24-28 ihrerseits nun in erfindungsgemäßer Weise bedarfsgerechte Informationen 9 für die Empfänger 4 generieren und diese wiederum in der Datenspeichereinheit 3 hinterlegen. Aus der Datenspeichereinheit 3 können die Empfänger 4 die generierten bedarfsgerechten Informationen 9 schließlich permanent oder sporatisch nach Bedarf abrufen. Auf diese Weise wird es möglich, für die Prozess- und Managementkette Ernte, Bergung, Lagerung, Weiterverarbeitung und Vermarktung landwirtschaftlicher Produkte eine brachenübergreifende Optimierung durchzuführen, wobei die Nutzer 6 des Datenaustauschsystems 1 untereinander Informationen 9, 10, 15 austauschen und editieren können. Ein wesentlicher Vorteil eines solchen Systems ist, dass die in der Datenspeichereinheit 3 hinterlegten Daten 9, 10, 15 permanent aktualisiert und im Sinne eines sich selbst verbessernden Systems weiterentwickelt werden können, sodass ihr Informationsgehalt zunehmend qualitativ hochwertiger wird. Dies hat insbesondere für den Empfänger 4 der bedarfsgerechten Informationen 9 den Vorteil, dass sich die Optimierung seiner Prozess- und Managementketten stetig verbessert.

Die von den Empfängern 4 der bedarfsgerechten Informationen 9 generierten Fragestellungen 15 können sehr unterschiedlich sein. Im Bereich der Betreiber von Emtemaschinen 18 und Erntebergungsmaschinen 19 spielen neben den Fragen der optimalen Einstellung der jeweiligen Arbeitsorgane der Maschinen 18, 19 vorallem ein effizientes Fuhrparkmanagement eine wesentliche Rolle. Bezüglich der optimalen Einstellung der jeweiligen Erntemaschinen 18, 19 kommt es vor allem auf die Verfügbarkeit von Expertenwissen, wie etwa dem Wissen von erfahrenen Betreibern der in Rede stehenden Maschinen 18, 19 oder der Umsetzung neuester wissenschaftlicher Erkenntnisse an. Weiter ist der Betreiber der Erntemaschinen 18, 19 stark an ferndiagnostischen Überwachungsmethoden seiner Maschinen durch die jeweiligen Hersteller interessiert, damit zum Beispiel frühzeitig verschleißbedingte Abnutzungen von Baugruppen erkannt werden und der Austausch dieser Baugruppen so organisiert werden kann, das reparaturbedingte Ausfallzeiten gering bleiben oder ganz vermieden werden. Insbesondere im Bereich des Fuhrparkmanagements von Lohnunternehmern 23 ist es für den koordinierten Einsatz der Maschinen wichtig, über die Reifestadien und die damit verbundenen Erntezeitpunkte informiert zu sein. Zudem spielt bei der Planung des Einsatzes von Erntemaschinen 18, 19 immer auch die zu erwartenden Wetterprognosen eine wichtige Rolle, da die Erntebedingungen maßgeblich von Witterungseinflüssen bestimmt werden. In diesem Zusammenhang sind deshalb insbesondere Informationen von Wetterdiensten 26 sowie Fernerkundungsdiensten 28, die insbesondere anhand der Pflanzenzusammensetzung deren Reifegrad bestimmen können sowie Informationen von Pflanzenbauberatern 27 von erheblicher Bedeutung.

Weiter ist es für Betreiber von Trocknungsanlagen 20 und Lagerbetrieben 21 wichtig zu wissen, welche Beschaffenheit die abgeernteten Produkte aufweisen und welche Mengen an Erntegut zu erwarten sind. Insbesondere für die Planung von Lager- und Trocknungskapazitäten sind derartige Informationen von besonderer Bedeutung. Hier setzt nun ein weiterer Aspekt der Erfindung an. Indem den Erntemaschinen 18, 19 selbst an sich bekannte Sensoren 29 zugeordnet sind, die beispielsweise die Masse des geernteten Gutes und dessen Feuchtigkeit bestimmen, werden weitere bedarfsgerechte Informationen 10 von den Erntemaschinen 18, 19 selbst generiert, die über das Datenübertragungsnetz 2 des erfindungsgemäßen Datenaustauschsystems 1 den übrigen Nutzern 6 und somit insbesondere den Betreiben der Trocknungsanlagen 20 und Lagerbetriebe 22 verfügbar gemacht werden. Zudem ist es denkbar, dass die Trocknungsanlagen 20 oder die Emtegutlager 21 mit an sich bekannten und deshalb nicht näher erläuterten Sensoren 30 ausgerüstet sind, die den jeweiligen Befüllgrad überwachen und diesen momentanen Befüllgrad als weitere bedarfsgerechte Informationen 10 generieren. Damit sind die Empfänger 4 von bedarfsgerechten Informationen 9 zugleich auch Lieferant von Informationen 10, die von den übrigen Nutzern 6 des erfindungsgemäßen Datenaustauschsystems 1 nutzbar sind.

Dieser wechselseitige Austausch von Informationen 10 gewinnt dann noch an Bedeutung, wenn man berücksichtigt, dass die in das Datenaustauschsystem 1 integrierten Erntemaschinen 18, 19 auch untereinander optimierte Einstellparameter austauschen können, sodass eine zeitbeanspruchende Generierung einer Fragestellung 15 für einen Teil der Erntemaschinen 18, 19 entfallen kann. Auch derartige Möglichkeiten führen zu Optimierungseffekten innerhalb von Prozess- und Managementketten in der landwirtschaftlichen Produktion.

Letztlich profitieren auch weiterverarbeitende Betriebe 22 von einem derartigen Datenaustauschsystem 1, da sie schon frühzeitig Informationen über die Beschaffenheit der zu verarbeitenden Produkte erhalten. Dies ist insbesondere in solchen verarbeitenden Betrieben von Bedeutung, die allein bestimmte Bestandteile eines Produktes aus diesem extrahieren, wie etwa die Gewinnung von Zucker aus Zuckerrohr oder Zuckerrüben.

Mit dem offenbarten auf elektronischem Datenaustausch basierenden System 1 wird eine Branchenkommunikation ermöglicht, die sich an dem jeweiligen in Fragestellungen 15 generierten Bedarf von Nutzern 6 orientiert, wobei die als Empfänger 4 der bedarfsgerechten Informationen 9 fungierenden Nutzer 6 auch so genannte virtuelle Unternehmungen sein können. Insbesondere könne diese virtuellen Unternehmungen im Bereich der landwirtschaftlichen Produktion Qualitätserzeugerketten sein, die vom Anbau bis zur Vermarktung Qualitätsdaten der Produkte sammeln und Nutzern 6 als bedarfsgerechte Informationen 9 verfügbar machen.

Das offenbarte erfindungsgemäße auf elektronischem Datenaustausch basierende System 1 ist nicht auf die beschriebenen Ausführungsbeispiele beschränkt sondern kann branchenübergreifend überall da angewendet werden, wo Prozess- oder Managementketten optimiert werden sollen.

### Bezugszeichenliste

- 1: Datenaustauschsystem
- 2: Datenübertragungsnetz
- 3: Datenspeichereinheit
- 4: Empfänger
- 5: Diensteanbieter
- 6: Nutzer
- 7: Datenübertragungsnetz
- 8: Datenübertragungsnetz
- 9: bedarfsgerechte Informationen
- 10: Informationen
- 11: Informationen
- 12: Datenübertragungsnetz
- 13: Sub-Diensteanbieter
- 14: Datenübertragungssystem
- 15: nutzerspezifische Fragestellung
- 16: Informationen
- 17: Informationen
- 18: Erntemaschine
- 19: Erntebergungsmaschine
- 20: Trocknungsanlage
- 21: Lagerbetrieb
- 22: Weiterverarbeiter
- 23: Lohnunternehmen
- 24: Hersteller
- 25: Expertenwissen
- 26: Wetterdienstinformation
- 27: Pflanzenbauberatung
- 28: Fernerkundungsdienst
- 29: Sensoren

## Patentansprüche

1. Auf elektronischem Datenaustausch basierendes System, wobei der Datenaustausch zwischen einer Vielzahl von Nutzern mittels wenigstens eines Datenaustauschsystems erfolgt und die Nutzer sowohl Anbieter als auch Empfänger von Informationen sein können,
**dadurch gekennzeichnet,**
**dass** ein Nutzer (6) oder eine Gruppe von Nutzern (6, 24-28) wenigstens eines Datenübertragungsnetzes (2) bedarfsgerechte Informationen (9) als Anbieter (5) generieren, wobei die bedarfsgerechten Informationen (9) in spezifischen Standards generiert werden und diese in spezifischen Standards generierten bedarfsgerechten Informationen (9) von den als Empfänger (4) fungierenden Nutzern (6, 18-23) des wenigstens einen Datenübertragungsnetzes (2) auf den Bedarf des jeweiligen Nutzers (6, 18-23) abgestimmt abgerufen und/oder editiert werden können.

2. Auf elektronischem Datenaustausch basierendes System nach Anspruch 1,
**dadurch gekennzeichnet,**
**dass** ein oder mehrere Anbieter (5, 24-28) einer Vielzahl von Empfängern (4, 18-22) die auf die Bedürfnisse des jeweiligen Empfängers (4, 18-23) angepassten bedarfsgerechten Informationen (9) in Form von Diensten zur Verfügung stellen.

3. Auf elektronischem Datenaustausch basierendes System nach einem oder mehreren der vorhergehenden Ansprüche,
**dadurch gekennzeichnet,**
**dass** Gruppen von Anbietern (5, 24-28) sich Dienste gegenseitig bekannt machen und abrufbar zur Verfügung stellen.

4. Auf elektronischem Datenaustausch basierendes System nach einem oder mehreren der vorhergehenden Ansprüche,
**dadurch gekennzeichnet,**
**dass** der oder die Anbieter (5, 24-28) Zugriffsrechte auf die angebotenen Dienste definieren können.

5. Auf elektronischem Datenaustausch basierendes System nach einem oder mehreren der vorhergehenden Ansprüche,
**dadurch gekennzeichnet,**
**dass** die in Form von Diensten zur Verfügung gestellten bedarfsgerechten Informationen (9) der Anbieter (5, 24-28) zeitgerecht und mit auf den Informationsbedarf des jeweiligen Empfängers (4, 18-23) angepassten Inhalt dem jeweiligen Empfänger (4) und/oder einer Gruppe von Empfängern (18-23) zur Verfügung gestellt werden.

6. Auf elektronischem Datenaustausch basierendes System nach einem oder mehreren der vorhergehenden Ansprüche,
**dadurch gekennzeichnet,**
**dass** der oder die Empfänger (4, 18-23) Fragestellungen (15) generieren, die über wenigsten ein Datenaustauschsystem (2, 7-8) zumindest einem Anbieter (5) von Diensten übermittelt werden und wobei der Dienst des zumindest einen Anbieters (5) die Beantwortung der generierten Fragestellungen (15) umfasst.

7. Auf elektronischem Datenaustausch basierendes System nach Anspruch 6,
**dadurch gekennzeichnet,**
**dass** der Dienst des Anbieters (5) die Einbeziehung eines oder mehrer Dienste weiterer Anbieter und/oder Sub-Diensteanbieter (5, 13) umfasst.

8. Auf elektronischem Datenaustausch basierendes System nach einem oder mehreren der vorhergehenden Ansprüche,
**dadurch gekennzeichnet,**
**dass** der oder die Dienste des wenigstens einen Anbieters (5) dem wenigstens einen Empfänger (4) permanent oder bedarfsgerecht zur Verfügung steht.

9. Auf elektronischem Datenaustausch basierendes System nach einem oder mehreren der vorhergehenden Ansprüche,
**dadurch gekennzeichnet,**
**dass** der Dienst des Anbieters (5) zur Beantwortung der Fragestellung (15) des Empfängers (4) die Beschaffung solcher Informationen (16, 17) einschließt, die der Empfänger (4) nicht ausdrücklich anfordert, die aber die Qualität des vom Anbieter (5) zur Verfügung gestellten Dienstes für den Empfänger (4) erhöht.

10. Auf elektronischem Datenaustausch basierendes System nach Anspruch 9,
**dadurch gekennzeichnet,**
**dass** der Anbieter (5) des Dienstes diese weiteren Informationen (16, 17) unter Einbeziehung der Dienste weiterer Anbieter (5, 13) beschafft.

11. Auf elektronischem Datenaustausch basierendes System, nach einem oder mehreren der vorhergehenden Ansprüche,
**dadurch gekennzeichnet,**
**dass** dem wenigstens einen Empfänger (4) die Dienste mehrerer Anbieter (5, 13) über einen Anbieter (5) zur Verfügung gestellt werden und/oder eine Auswahl von Diensten oder alle Dienste dem wenigstens einen Empfänger (4) von verschiedenen Anbietem (5) zur Verfügung gestellt werden.

12. Auf elektronischem Datenaustausch basierendes System nach einem oder mehreren der vorhergehenden Ansprüche,
**dadurch gekennzeichnet,**
**dass** der oder die Empfänger (4) oder Anbieter (5, 13) von Diensten stationäre oder mobile Einheiten (18-28) sind, die über ein oder mehrere Datenaustauschsysteme (2, 7-8, 12, 14) untereinander und/oder mit einem oder mehreren Empfängern (4) oder Anbietern (5, 13) von Diensten kommunizieren können.

13. Auf elektronischem Datenaustausch basierendes System nach einem oder mehreren der vorhergehenden Ansprüche,
**dadurch gekennzeichnet,**
**dass** ein oder mehrere Anbieter (5, 13, 24-28) und ein oder mehrere Empfänger (4, 18-23) wechselseitig Informationen über ein oder mehrere Datenaustauschsysteme (2, 7-8, 12, 14) austauschen.

14. Auf elektronischem Datenaustausch basierendes System nach einem oder mehreren der vorhergehenden Ansprüche,
**dadurch gekennzeichnet,**
**dass** das eine oder die mehreren Datenaustauschsysteme (2, 7-8, 12, 14) globale und/oder örtlich begrenzte Datenaustauschsysteme sind.

15. Auf elektronischem Datenaustausch basierendes System nach einem oder mehreren der vorhergehenden Ansprüche,
**dadurch gekennzeichnet,**
**dass** den stationären und/oder mobilen Empfängern (4, 18-23) Sensoren (29) zugeordnet sind, die empfängerspezifische Informationen (10) generieren, die über das wenigstens eine Datenaustauschsystem (2, 7-8, 12, 14) zumindest einem Anbieter (5, 13) von Diensten und/oder wenigstens einem weiteren Empfänger (4) zur Verfügung stehen.

16. Auf elektronischem Datenaustausch basierendes System nach einem oder mehreren der vorhergehenden Ansprüche,
**dadurch gekennzeichnet,**
**dass** die von den Nutzren (6) in den Datenübertragungsnetzen (2, 7, 8) generierten Informationen (9-11, 16, 17) in standardisierten Formaten generiert werden.
